Europäisches Patentamt

European Patent Office

Office européen des brevets

(19)

(11) Publication number: **0 030 065**
A1

(12) # EUROPEAN PATENT APPLICATION

(21) Application number: **80201133.8**

(22) Date of filing: **28.11.80**

(51) Int. Cl.³: **F 16 F 1/37**
C 08 J 9/42, B 60 R 21/04
//A42B3/00

(30) Priority: **28.11.79 NL 7908635**

(43) Date of publication of application:
**10.06.81 Bulletin 81/23**

(84) Designated Contracting States:
**BE DE FR GB IT NL SE**

(71) Applicant: **N.V. Noordelijke
Ontwikkelingsmaatschappij
Europaweg 27
NL-9723 AS Groningen(NL)**

(72) Inventor: **Dijkhuizen, Willem
Mensinge 14
NL-9471 HX Zuidlaren(NL)**

(74) Representative: **Urbanus, Henricus Maria, Ir. et al,
c/o Vereenigde Octrooibureaux Nieuwe Parklaan 107
NL-2587 BP 's-Gravenhage(NL)**

(54) **Object at least locally covered with impact energy absorbing means.**

(57) Object such as a knee protector (4) (fig, 1) at least locally covered with impact energy absorbing means made of a material comprising a lattice material of loose structure having liquid retention properties, said material being hardened over at least a portion of its thickness by thermal curing of a thermosetting synthetic resin material with which said portion has been impregnated.

FIG.1

EP 0 030 065 A1

Croydon Printing Company Ltd.

Title:
Object at least locally covered with impact energy absorbing means.

This invention relates to an object at least locally covered with impact energy absorbing means.

U.S. patent specification No. 3,922,429 discloses a bar element which can be used as a knee-protecting means mounted on the dashboard of a motorcar. The element is made of a laminate material comprising a base member made of a rigid foam material which is deformable to absorb impact energy, and which base member is covered on the impact absorbing surface of the element with a layer of a porous, resilient, expanded foam. The base member and the resilient foam layer are bonded together by means of an intermediate layer in the form of a tough, frangible crust composed of a selected portion of the resilient, expanded foam material of the foam layer, which is impregnated with a portion of the rigid foam material.

The resilient expanded foam layer may be covered on its outside with a cover layer, and may itself be made of a flexible, resilient polyurethane foam of a given density.

The base member may be made of a rigid polyurethane foam.

The cover layer may be a separate layer secured to the resilient foam layer by means of an adhesive, but may also be a so-called integral skin, which is known in the art as a non-porous, polymeric, flexible outer skin developed in situ.

The procedure in making the prior bar element is generally that the cover layer is applied in a mould, following the contours thereof, on the cover layer the thin, flexible, resilient foam layer is applied, with or without the use of an adhesive, whereafter, on the resilient foam layer, the reaction mixture is poured to form a rigid-type synthetic foam plastics, which is allowed to expand freely to form the non-porous base member of rigid foam material, which is cured.

When the expandable reaction mixture is poured on to the resilient foam layer, care is taken that the reaction mixture is well into the foaming phase, so that the rising foam limits the depth of penetration of the reaction mixture into the flexible foam layer, and thus indeed an intermediate layer in the form of a tough crust is formed only. If this condition were not maintained, the reaction mixture would penetrate too deeply into the flexible foam layer, as a result of which the element ultimately produced does not have the desired "feel".

The function of the intermediate layer is to serve as a shield for the base member of the rigid foam material, which gives a first protection from minor loads or impacts of or against the element, and hence leaving it up to the base member to absorb major impact energies.

It is an object of the present invention to provide an object, in particular a motor-vehicle, such as a motorcar, which is covered with novel means for absorbing impact energy.

The invention is characterized in that the impact-energy absorbing means are made of a material comprising a lattice material of loose structure having liquid retention properties, which material has been hardened for at least a portion of its thickness by the thermal curing of a thermosetting plastics material with which said portion has been impregnated.

In Chemical Abstracts, Vol. 82, No. 26, page 52, Abstract 172137j, there is described a polyurethane foam material impregnated with a phenol resin, but this is mainly done with reference to the material properties as compared with those of the starting foam. There is no reference whatsoever to the use of the material as a padding in objects such as a motorcar to protect its occupants from fatal wounds in the event of collisions.

The lattice material preferably is made of an isotropic synthetic foam plastics.

A suitable lattice material is soft polyurethane foam material, but other materials of loose structure are suitable for the purposes of the present invention, such as felt.

The lattice material is impregnated with the thermosetting synthetic plastics material in any suitable manner.

Thus, for example, if the lattice material is in the form of a sheet, the thermosetting material may, for example, just be poured on to it in a jet, whereafter the lattice sheet is passed through a pair of rollers to effect uniform distribution of the thermosetting plastics material within at least a portion of the thickness of the lattice. Thereafter the impregnated lattice may be placed in a furnace to cause the thermosetting material to set following its own mechanism. What is ultimately achieved with this treatment is in fact that an initially soft foam structure has become hard to produce a material whose strength characteristics resemble those of rusk.

Examples of thermosetting synthetic plastics material to be used according to the present invention are polyurethane, epoxy, unsaturated polyester, ureaformaldehyde, phenol formaldehyde, and melamine formaldehyde resin materials.

It is of advantage that, in making the energy-absorbing material according to the present invention, the lattice material should be impregnated asymmetrically, i.e. not throughout its entire thickness. The non-impregnated portion of the lattice material, such as the soft polyurethane resin material, will thus retain its properties, so that when the energy-absorbing material is struck by an object first the non-impregnated part will be compressed to form a recess at the place where the padding is hit at the surface of the hardened part of the material. This prevents the object from glancing off laterally during a collision. If persons are involved in a collision, this feature is of great importance as it prevents parts of the body from slipping off the energy-absorbing padding after striking it, which helps to alleviate the seriousness of injuries.

A major source of dangerous wounds, in particular to the knees, is the dashboard in a motorcar. A preferred embodiment of the invention, therefore, is a motorcar in which the dashboard is covered, for the protection of knees, with impact energy absorbing means in the form of a bar screening the surface of the dashboard, and made of a material as specified hereinbefore.

By a selection of the materials, that is to say, of the lattice material and of the thermosetting resin, and as far as the resin is concerned also the quantity thereof used for impregnation, it can be arranged that the energy absorbing means according to the invention collapses when an impact force is exerted thereon above a pre-determined value.

The invention will now be described with reference to the accompanying drawings. In said drawings,

Fig. 1 illustrates diagrammatically and purely by way of example, a preferred embodiment of the invention in the form of a knee-protecting member on the dashboard of a crash car for experimental purposes; and

Fig. 2 is a force-deformation graph showing the range satisfied by the material for use in the impact energy absorbing means of the present invention.

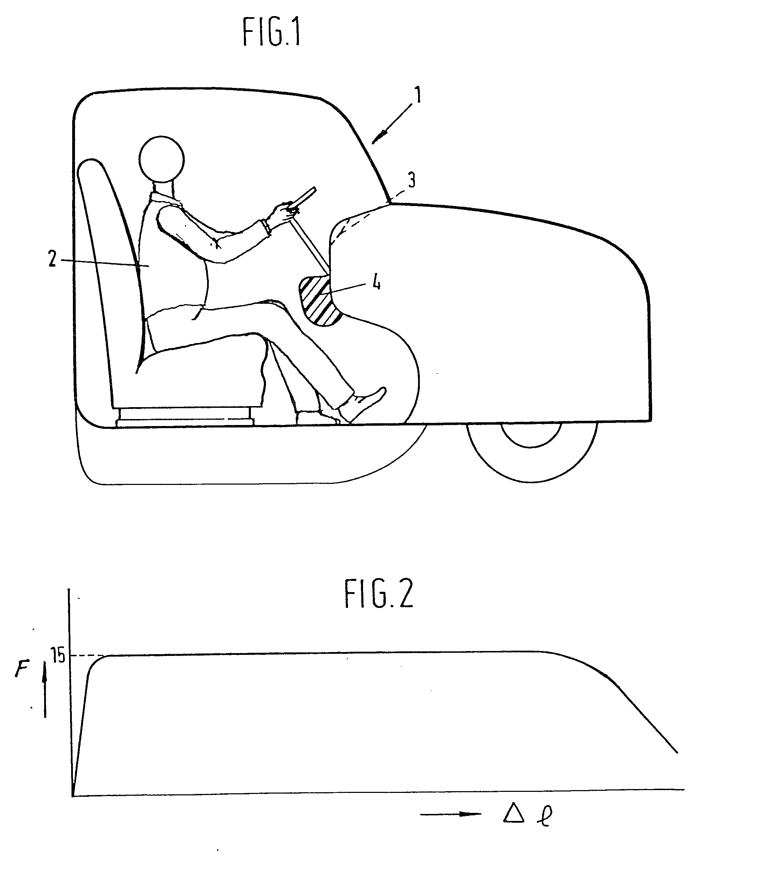

Referring to Fig. 1, there is shown a cabin of a motorcar, generally designated by 1, driven by a driver 2. Dashboard 3 is provided with a knee protector 4, the shape of which will in practice match the contours of the dashboard. The side of knee protector 4 facing the driver has a depth of approximately 1 cm which is not hardened by impregnation with a thermoplastic resin and curing.

The material of which the knee protector was made was such that at an impact force corresponding to a value of 12kN of less the knee protector was compressed and crushed with absorption of the impact energy.

In Fig. 2 the force is plotted along the Y-axis, for example, in Newton (N), and the deformation is plotted along the X-axis, expressed in a unit of length, for example, in millimetres. The area enclosed by the curve is a measure for the energy absorbed. In this connection the level of the plateau of the curve is adjustable by selection of the components of the material. For use in a knee protector, the level of the plateau is set at a value corresponding to approximately 5 kN.

Although the energy absorbing means according to the invention are particularly suitable for use in motorcars, the invention is not so limited. Thus, for example, helmets, such as safety helmets can suitably be equipped with the energy absorbing means. Generally speaking the object covered with the energy absorbing means as described above and shown in the accompanying Fig. 1 can be modified without departing from the scope of the invention.

CLAIMS:

1.　　An object at least locally covered with impact energy absorbing means, said means having an impact energy absorbing surface, characterized in that the impact energy absorbing means are made of a material comprising a lattice material of loose structure having liquid retention properties, which lattice material has been hardened over at least a portion of its thickness by thermal curing of a thermosetting synthetic plastics material with which said portion has been impregnated.

2.　　An object as claimed in claim 1, wherein said lattice material is an isotropic synthetic foam plastics.

3.　　An object as claimed in claim 2, wherein said lattice material is a soft polyurethane foam material

4.　　An object as claimed in claim 1, wherein said lattice material is felt.

5.　　An object as claimed in claim 1-4, wherein said impact energy absorbing means are, on the side of the impact energy absorbing surface thereof, not hardened over a limited portion of the thickness dimension thereof.

6.　　A motor vehicle, in particular a motorcar, having a dashboard which for knee protection is covered with impact energy absorbing means, characterized in that said impact energy absorbing means are made in the form of a bar screening the surface of the dashboard and made of the material specified in claims 1-5.

7.       A knee protector to be mounted on the dashboard of a motor vehicle, in particular a motorcar, characterized by being made of the material specified in claims 1-5.

FIG.1

FIG.2

## European Patent Office

## EUROPEAN SEARCH REPORT

Application number

EP 80 20 1133

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | F 16 F 1/37 <br> C 08 J 9/42 <br> B 60 R 21/04// <br> A 42 B 3/00 |
| X,D | CHEMICAL ABSTRACTS, vol. 82, no. 26, 30th June 1975, page 52, no. 172137j <br> Columbus, Ohio, U.S.A. <br><br> & JP - A - 74 109 466 (WAKO CHEMI-CAL CO., LTD.) 17-10-1974 <br> * Abstract * <br><br> -- | 1-3,6, 7 | |
| | US - A - 3 627 622 (GUADALUPE VEGA) <br> * Claim 1; column 1, lines 8-24 * <br><br> -- | 1-3,5 | TECHNICAL FIELDS SEARCHED (Int. Cl.³) |
| D | US - A - 3 922 429 (J.A. WELCH et al.) <br> * Whole document * <br><br> -- | 1-3,5-7 | C 08 J 9/42 <br> A 42 B 3/00 <br> B 60 R 21/04 <br> F 16 F 1/37 |
| | US - A - 3 269 887 (L.J. WINDECKER) <br> * Claims 1-3; column 1, lines 29-40 * <br><br> -- | 1-3 | |
| | US - A - 4 082 704 (B. RUDNER et al.) <br> * Abstract * <br><br> -- | 1-3 | CATEGORY OF CITED DOCUMENTS |
| A | FR - A - 2 379 262 (M. FINQUEL et al.) <br> * Claims * <br><br> ---- | 1 | X: particularly relevant <br> A: technological background <br> O: non-written disclosure <br> P: intermediate document <br> T: theory or principle underlying the invention <br> E: conflicting application <br> D: document cited in the application <br> L: citation for other reasons |

| | | |
|---|---|---|
| The present search report has been drawn up for all claims | | |
| Place of search <br> The Hague | Date of completion of the search <br> 03-03-1981 | Examiner <br> HALLEMEESCH |

EPO Form 1503.1 06.78